(19) Europäisches Patentamt
European Patent Office
Office européen des brevets

(11) Publication number : **0 463 432 B1**

(12) **EUROPEAN PATENT SPECIFICATION**

(45) Date of publication of patent specification : **11.05.94 Bulletin 94/19**

(51) Int. Cl.$^5$ : **G11B 5/702**

(21) Application number : **91109339.1**

(22) Date of filing : **07.06.91**

(54) **Binder for magnetic recording medium.**

(30) Priority : **13.06.90 JP 156427/90**
**14.06.90 JP 156103/90**

(43) Date of publication of application :
**02.01.92 Bulletin 92/01**

(45) Publication of the grant of the patent :
**11.05.94 Bulletin 94/19**

(84) Designated Contracting States :
**DE FR GB IT**

(56) References cited :
**EP-A- 0 219 097**
**DERWENT JAPANESE PATENTS REPORT, week 8841, abstract no. 88-288756/41, DerwentPublications Ltd, London, GB; & JP-A-63 210 155 (MITSUBISHI RAYON K.K.)**

(56) References cited :
**DERWENT JAPANESE PATENTS REPORT, week 8829, abstract no. 89-210082/29, DerwentPublications Ltd, London, GB; & JP-A-1 146 945 (NIPPON OILS & FATS K.K.)**
**DERWENT JAPANESE PATENTS REPORT, week 9025, abstract no. 90-188964/25, DerwentPublications Ltd, London, GB; & JP-A-2 123 149 (NIPPON OILS & FATS K.K.)**

(73) Proprietor : **SEKISUI KAGAKU KOGYO KABUSHIKI KAISHA**
**4-4 Nishitenma 2-chome Kita-ku**
**Osaka shi Osaka (JP)**

(72) Inventor : **Fujii, Noriki**
**10-2, Kouchi-cho**
**Shinnanyo-shi, Yamaguchi (JP)**
Inventor : **Shibasaki, Yukio**
**91-6, Hetaosida Higasi**
**Tokuyama-shi, Yamaguchi (JP)**

(74) Representative : **Hansen, Bernd, Dr. Dipl.-Chem. et al**
**Hoffmann, Eitle & Partner Patent- und Rechtsanwälte, Postfach 81 04 20**
**D-81904 München (DE)**

**EP 0 463 432 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### FIELD OF THE INVENTION

The present invention relates to a binder for magnetic recording media, and more particularly to a binder for magnetic recording media capable of forming a magnetic recording layer having excellent magnetic characteristics and durability.

### BACKGROUND OF THE INVENTION

In general, a magnetic recording medium which is used as a magnetic recording tape, a magnetic recording disk, etc., is produced by coating a magnetic coating composition containing a ferromagnetic powder and a binder on a base material and after applying thereto a magnetic field to orient the ferromagnetic powder, drying the coated layer to form a magnetic layer. In this case, for obtaining a magnetic recording medium having excellent magnetic characteristics, it is required that the ferromagnetic powder is uniformed dispersed in the magnetic coating composition. As the binder, a vinyl chloride-vinyl acetate-vinyl alcohol type polymer, a mixture of the polymer and an isocyanate compound, etc., are know. For example, JP-B-52-50204 (the term "JP-B" as used herein means an "examined published Japanese patent application") proposes a vinyl chloride copolymer composed of vinyl chloride and 2-hydroxypropyl acrylate as a binder capable of dispersing well inorganic pigments, and JP-A-62-112217 and JP-A-1-184629 (the term "JP-A" as used herein means an "unexamined published Japanese patent application") propose vinyl chloride copolymers having an epoxy group.

However, with the recent requirement of high-density recording of a magnetic recording medium, a ferromagnetic powder is finely grained and the binders are insufficient in dispersibility for the finely grained ferromagnetic powder and also are insufficient in the slide-contact durability with a magnetic head.

### SUMMARY OF THE INVENTION

The present invention has been made to overcome the above-described problems.

An object of the present invention is to provide a binder for a magnetic recording medium capable of dispersing a finely grained ferromagnetic powder and forming a magnetic layer having excellent magnetic characteristics and durability.

That is, according to the first embodiment of the present invention, there is provided a binder for a magnetic recording medium comprising

(a) from 59 to 98% by weight of vinyl chloride,

(b) from 1 to 30% by weight of vinyl monomers with hydroxy groups or vinyl monomers with epoxy groups, and

(c) from 1 to 40% by weight of N-substituted maleimides.

According to the second embodiment of the present invention, there is provided a binder for a magnetic recording medium comprising

(a) from 59 to 97% by weight of vinyl chloride,

(b) from 1 to 30% by weight of vinyl monomers with hydroxy groups or vinyl monomers with epoxy groups

(c) from 1 to 40% by weight of N-substituted maleimides, and

(d) from 0.05 to 5% by weight of at least one kind of polymerizable monomer with a carboxyl group, a sulfonic acid group, a sulfonate group, a phosphoric acid group, a quaternary ammonium salt group, or an amino group.

### DETAILED DESCRIPTION OF THE INVENTION

Vinyl monomers with hydroxy groups (b) which can be used in the present invention, have a reactive double bond and a hydroxy group. Examples thereof are reaction products of (meth)acrylic acid and polyhydric alcohols such as 2-hydroxyethyl (meth)acrylate, 2-hydroxypropyl (meth)acrylate, 3-chloro-2-hydroxypropyl (meth)acrylate, polyethylene glycol mono(meth)acrylate represented by the formula

$$CH_2=CR-COO(CH_2CH_2O)_nH$$

(wherein n represents an integer of from 2 to 9 and R represents a hydrogen atom or a methyl group), polypropylene glycol mono(meth)acrylate represented by the formula

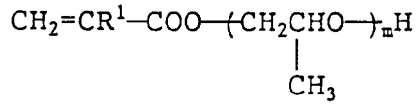

(wherein m represents an integer of from 2 to 6 and $R^1$ represents a hydrogen atom or a methyl group), reaction products of (meth)acrylic acid and polyhydric alcohol, such as 2-hydroxyethyl-2-acryloyloxy phthalate, and (meth)acrylic acid type amides such as N-methylol (meth)acrylamide. In these compounds, 2-hydroxyethyl (meth)acrylate and 2-hydroxypropyl (meth)acrylate are preferably used in the present invention.

Vinyl monomers with epoxy groups (b) which can be used in the present invention, have a reactive double bond and an epoxy group. Examples thereof are glycidyl ether of unsaturated alcohols, such as allyl glycidyl ether, methallyl glycidyl ether, etc.; glycidyl esters of (meth)acrylic acid, such as glycidyl acrylate, glycidyl methacrylate, etc.; unsaturated dicarboxylic acid esters such as methylglycidyl itaconate, glycidylethyl maleate, etc.; and olefinic epoxides such as butadiene monooxide, vinylcyclohexene monooxide, etc.

N-Substituted maleimides (c) which can be used in the present invention are the compounds represented by the formula;

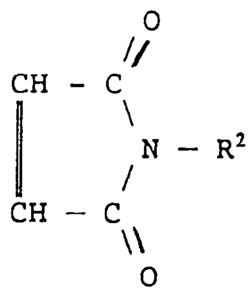

wherein $R^2$ represents preferably an aliphatic group, an alicyclic group, or an aromatic group, having from 1 to 20 carbon atoms. Examples of the N-substituted maleimides are N-methylmaleimide, N-n-propyl-maleimide, N-isopropylmaleimide, N-n-butylmaleimide, N-tert-butylmaleimide, N-n-hexylmaleimide, N-cyclohexylmaleimide, N-phenylmaleimide, N-2-chlorophenylmaleimide, N-2-methyl-phenylmaleimide, N-2-ethylphenylmaleimide, N-2,6-dichlorophenylmaleimide N-2,6-dimethylphenylmaleimide, N-benzylmaleimide, N-(2-chlorobenzyl)maleimide, N-(2-methylbenzyl)maleimide, and N-naphthylmaleimide.

In these compounds, N-cyclohexylmaleimide and N-phenylmaleimide are preferably used.

The binder for a magnetic recording medium of the first embodiment of the present invention is a copolymer comprising (a) vinyl chloride, (b) vinyl monomers with hydroxy groups or vinyl monomers with epoxy groups, and (c) N-substituted maleimides.

In this case, if the content of vinyl chloride (a) is less, the solubility of the copolymer in an organic solvent is reduced, while if the content thereof is too large, the copolymer becomes hard to reduce the flexibility. Thus, the content of vinyl chloride (a) for use in the present invention is from 59 to 98% by weight.

Also, if the content of vinyl monomers with hydroxy groups or vinyl monomers with epoxy groups (b) is less, the dispersibility of a ferromagnetic powder in the magnetic coating composition is reduced, while if the content thereof is too large, the solubility of the copolymer in an organic solvent is reduced, the content thereof is from 1 to 30% by weight, and preferably from 8 to 20% by weight.

Furthermore, if the content of N-substituted maleimides (c) is less, the dispersibility of a ferromagnetic powder in the magnetic coating composition is reduced and also the heat resistance of copolymer and the abrasion resistance of the magnetic layer are reduced, while if the content is too large, the magnetic layer becomes brittle. Thus, the content thereof is from 1 to 40% by weight, and preferably from 5 to 30% by weight.

Also, if the average degree of polymerization of the copolymer is less, the mechanical strength of the magnetic layer is reduced, while if the average degree of polymerization is too large, the viscosity of a solution obtained by dissolving the copolymer in an organic solvent becomes too high and as a result, the dispersibility of a ferromagnetic powder and the film-forming property of the magnetic layer are decreased. Thus, the average degree of polymerization of the copolymer is preferably from 150 to 800, and more preferably from 200 to 600 in the present invention.

For producing the copolymer, an optional method can be employed and, for example, conventional suspension polymerization method, an emulsion polymerization method, a solution polymerization method, and

a bulk polymerization which are usually employed for the polymerization of vinyl chloride using a radical polymerization initiator, can be employed.

In these methods, the suspension polymerization method is preferably employed in the present invention since the copolymer obtained is reluctant to contain impurities and the production cost is relatively low.

In the suspension polymerization, any suspension stabilizer can be used without specific restriction and, for example, partially saponified polyvinyl alcohol and cellulose derivatives can be used.

Also, there is no particular restriction on the radical polymerization initiator which is used for the suspension polymerization and, for example, organic peroxides such as benzoyl peroxide, dilauroyl peroxide, tert-butyl peroxyneodecanoate, etc., can be used.

At the polymerization, the whole amount of the N-substituted maleimide may be added to a polymerization vessel before the initiation of the polymerization or the N-substituted maleimide may be added devidedly or continuously to the polymerization.

In particular, in the case of using an N-substituted maleimide such as N-phenylmaleimide, the monomer reactivity of which differs from vinyl chloride is greatly apart, it is preferred for improving the heat resistance of the copolymer to add the whole amount thereof devidedly or continuously during the polymerization. In this case, it is preferred to use the N-substituted maleimide as a solution in an organic solvent such as acetone, methanol, etc., or a dispersion in water. Also, the polymerization temperature is generaily from 30°C to 90°C and the polymerization time is from 2 hours to 20 hours.

In the second embodiment of the present invention, to the copolymer is further copolymerized the polymerizable monomer (d) with a sulfonic acid group, a sulfonate group, a carboxyl group, a phosphoric acid group, a quaternary ammonium salt group, or an amino group.

The above-described polymerizable monomers (d) can be used singly or as a mixture thereof.

Examples of the polymerizable monomer with a sulfonic acid group or a sulfonate group described above are 2-acrylamido-2-methylpropanesulfonic acid and sodium methallylsulfonate.

Examples of the polymerizable monomer with a carboxyl group are acrylic acid, methacrylic acid, succinic acid mono(meth)acryloyloxyethyl ester, phthalic acid mono(meth)acryloyloxyethyl ester, maleic acid n-butyl monoester, maleic acid, and fumaric acid. In these monomers, acrylic acid, methacrylic acid, maleic acid n-butyl monoester, and maleic acid are preferably used in the present invention.

Examples of the polymerizable monomer with a phosphoric acid are acid phosphoxyethyl (meth)acrylate, acid phosphoxypropyl (meth)acrylate, and 3-chloro-2-acid phosphoxypropyl (meth)acrylate.

Examples of the polymerizable monomer with a quaternary ammonium salt group are 2-hydroxy-3-methacryloyloxypropyltrimethyl ammonium chloride, methacryloyloxyethyltrimethyl ammonium chloride, and trimethyl-3-methacryloylamidopropyl ammonium chloride.

Also, examples of the polymerizable monomer with an amino group are dimethylamino (meth)acrylate, diethylamino (meth)acrylate, N,N-dimethylaminopropylacrylamide, and tert-butylaminoethyl (meth)acrylate.

If the content of the above-described polymerizable monomer (d) is less, the dispersibility of a ferromagnetic powder in the magnetic coating composition is reduced, while if the content thereof is too large, the surface smoothness and the humidity resistance of the magnetic layer are reduced. Thus, the content thereof is from 0.05 to 5% by weight, and preferably from 0.1 to 3% by weight. In addition, in this case, the content of vinyl chloride (a) becomes from 59 to 97% by weight.

The copolymer of the present invention may be further copolymerized with a monomer copolymerizable with vinyl chloride in the range of not reducing the fundamental properties as a binder, such as the dispersibility of a ferromagnetic powder, the heat resistance, etc.

Examples of the monomer copolymerizable with vinyl chloride are α-olefins such as ethylene, propylene, etc.; vinyl esters such as vinyl acetate, vinyl propinate, etc.; vinyl ethers such as butyl vinyl ether, cetyl vinyl ether, etc.; acrylic acid esters such as methyl acrylate, ethyl acrylate, etc.; methacrylic acid esters such as methyl methacrylate, ethyl methacrylate, phenyl methacrylate, etc.; aromatic vinyls such as styrene, α-methylstyrene, etc.; vinyl cyanides such as acrylonitrile, methacrylonitrile, etc.; vinyl halides such as vinylidene chloride, vinyl fluoride, etc.; unsaturated dicarboxylic acid esters such as dimethyl maleate, dimethyl fumarate, etc.; and unsaturated dicarboxylic acid anhydrides such as maleic acid anhydride, etc.

A magnetic coating composition can be prepared from the binder for a magnetic recording medium of the present invention by the conventional method. For example, the binder is dissolved in an organic solvent and then a ferromagnetic powder such as the powder of cobalt-modified γ-iron oxide, etc., is dispersed in the solution.

The contents of the binder and the ferromagnetic powder in the magnetic coating composition can be properly determined according to the properties of the magnetic recording layer obtained by coating the coating composition and drying. Generally, the content of the binder in the magnetic coating composition is preferably from 5 to 30% by weight and the amount of the binder is preferably from 10 to 100 parts by weight per

100 parts by weight of the ferromagnetic powder.

The organic solvent described above are toluene, methyl ethyl ketone, methyl isobutyl ketone, cyclohexanone, etc.

Also, for improving the abrasion resistance and the heat resistance of the magnetic layer, an isocyanate compound may be added to the magnetic coating composition. The crosslinking reaction of the hydroxy group and the isocyanate compound easily proceeds to further improve the abrasion resistance and the heat resistance of the magnetic layer. And, when an acidic compound is used together with the isocyanate compound, the crosslinking reaction of the epoxy group and the isocyanate compound easily proceeds to further improve the abrasion resistance and the heat resistance of the magnetic layer. Thus the use of the acidic compound is preferred.

Examples of the isocyanate compounds are toluylene diisocyante, diphenylmethane diisocyanate, dianisidine diisocyanate, hexamethylene diisocyanate, metaxylylene diisocyanate, the reaction product of trimethylolpropane and toluylene diisocyanate, etc. If the amount of the isocyanate compound added is less, the abrasion resistance, the heat resistance, etc., of the magnetic layer cannot be improved, while if the amount added is too large, the crosslinking density becomes high to make the magnetic layer brittle, and hence it is preferred that the addition amount thereof is from 0.3 to 30 parts by weight per 100 parts by weight of the binder.

Also, examples of the acidic compound are carboxylic acids such as oxalic acid, malonic acid, succinic acid, phthalic acid, maleic acid, fumaric acid, formic acid, monochloroacetic acid, dichloroacetic acid, trichloroacetic acid, o-nitrobenzoic acid, m-nitrobenzoic acid, p-nitrobenzoic acid, o-chlorobenzoic acid, m-chlorobenzoic acid, trimellitic acid, pyromellitic acid, etc.; sulforous acids; sulfonic acids; phosphorous acids; and phosphoric acids.

If the amount of the acidic compound added is less or larger, the effect of accelerating the crosslinking reaction of the epoxy group and the isocyanate compound is reduced, and hence it is preferred that the amount of the acidic compound added is from 0.1 to 5 times equivalent of the chemical equivalent of the epoxy group in the copolymer.

Then, the invention is explained more practically by the following examples.

In addition, the measurement methods of the average degree of polymerization and the compositions of the vinyl chloride type copolymers, and each property of the magnetic recording media shown in each example as the results were as follows.

(1) Average Degree of Polymerization:

Measured according to the method of JIS K6721.

(2) Composition:

After measuring the content of chlorine by an oxygen flask burning method, the component composition was measured by an element analyzer (Type; CHN Code MT-5, trade name, made by Yanagimoto Seisakusho K.K.).

(3) Gloss:

Measured by a digital variable glossmeter (Type; VG-1G, trade name, made by Nippon Denshoku Kogyo K.K.)

(4) Heating Adhesive Property:

When base films each having formed thereon a magnetic layer were superposed with each other such that the magnetic layers were brought into contact with each other and after heating them to 120°C for 15 minutes in a state of applying a load of 70 g/$cm^2$, the end of one film was raised, the case that both the films were separated from each other was defined as o and the case that both the films were not separated (were in adhered state) was defined as x.

(5) Gel Percentage:

A sample for the measurement was immersed in a mixed solvent of toluene and methyl isobutyl ketone (1/1 by weight ratio) for 24 hours at 50°C and the undissolved portion of the sample shown by weight percent

was defined as the gel percentage.

In addition, a composition obtained by removing a ferromagnetic powder form the magnetic coating composition obtained in each example was coated on the glass plate, the coated layer was dried for 2 hours at 100°C and further for 24 hours at 50°C, and the layer thus formed was used as the sample for the above measurement.

(6) Squareness Ratio:

Measured by a direct current magnetization characteristics recording apparatus (Type; T/3256-30, trade name, made by Yokogawa Electric Corporation).

Example 1

In a 15 liter pressure vessel equipped with a stirrer and a jacket were charged 8 kg of ion-exchanged water, 11 g of hydroxypropylethyl cellulose, and 8.8 g of dilauroyl peroxide, after tightly closing the vessel and removing air remaining in the vessel, 3 kg of vinyl chloride was pressed in the vessel, and the mixture was heated to 70°C by the jacket. Immediately after reaching the temperature in the vessel 70°C, a solution of 10 g of 2-hydroxypropyl acrylate and 7.0 g of N-cyclohexylmaleimide dissolved in 10 g of acetone was pressed in the vessel, and the same amount of the solution was added 39 times at an interval of 5 minutes. Polymerization was carried out with stirring. After 5 minutes since the final addition of the solution, the reaction mixture was cooled and remaining vinyl chloride was discharged from the vessel. Then, the polymer slurry was taken out, washed by ion-exchanged water and dried to provide a copolymer (A-1). The composition and the average degree of polymerization of the copolymer (A-1) were measured. The results are shown in Table 1 below.

The copolymer (A-1) obtained was dissolved in a mixed solution of toluene and methyl isobutyl ketone (1/1 by weight ratio) to provide a solution of 15% by weight of the copolymer and after supplying to the solution obtained, cobalt-modified $\gamma$-iron oxide in an amount of 4 times (by weight) the amount of the copolymer and stainless steel balls having a diameter of 0.31 cm (1/8 inch) in an amount of 32 times (by weight) the amount of the copolymer, the mixture was mixed by a paint conditioner for 4 hours to provide a magnetic coating composition.

The coating composition was coated on a polyester film of 25 μm in thickness, and after orienting the ferromagnetic powder by applying a magnetic field of 2,000 Gs, the layer was dried to form a magnetic layer having a thickness of 6 μm. Then, the squareness ratio and the gloss of the magnetic layer were measured. The results are shown in Table 1 below.

Examples 2 to 5 and Comparative Examples 1 and 2

Copolymers (A-2 to A-5, A-7, and A-8) were obtained in the same manner as in Example 1 except that the kinds and the amounts of the N-substituted maleimides and vinyl monomers with hydroxy groups were changed. The compositions and the average degrees of polymerization of the copolymers were measured. The results obtained are shown in Table 1 below.

Also, in the same manner as in Example 1, each magnetic coating composition was prepared, each magnetic layer was formed using the coating composition, and the squareness ratio and the gloss of the magnetic layer were measured. The results are shown in Table 1.

Example 6

In a 25 liter pressure vessel equipped with a stirrer and a jacket were charged 6.8 kg of methanol and 53 g of $\alpha$-cumylperoxy neodecanoate, after tightly closing the vessel and removing remaining air from the vessel, 3.5 kg of vinyl chloride was pressed in, and then the mixture was heated to 43°C by the jacket. Immediately after reaching the temperature in the vessel 43°C, a mixed solution of 6.75 g of 2-hydroxypropyl acrylate, 4 g of N-cyclohexylmaleimide, 25 g of methanol and 32.5 g of vinyl chloride was added thereto, and the same amount of the mixed solution was added 39 times at an interval of 5 minutes. Polymerization was carried out with stirring. After 5 minutes since the final addition of the solution, the reaction mixture was cooled. When the temperature of the reaction mixture became below 25°C, excessive ion-exchanged water was supplied thereto, and after removing remaining vinyl chloride, the polymer slurry was taken out, washed, and dried to provide a copolymer (A-6).

The composition and the average degree of polymerization of the copolymer obtained were measured. The results are shown in Table 1 below.

Also, in the same manner as in Example 1, a magnetic layer was formed, the squareness ratio and the gloss of the magnetic layer were measured. The results are shown in Table 1 below.

Comparative Example 3

In the same manner as in Example 1 by using a vinyl chloride-vinyl acetate-vinyl alcohol copolymer (91/3/6 by weight, average degree of polymerization 440) (A-9), a magnetic layer was formed. The squareness ratio and the gloss of the magnetic layer were measured. The results are shown in Table 1 below.

Table 1

| Example | | Copolymer Composition: Vinyl Chloride (wt%) | Copolymer Composition: N-substituted Maleimide, Kind | Copolymer Composition: N-substituted Maleimide (wt%) | Copolymer Composition: Vinyl Monomer with Hydroxy Group, Kind | Copolymer Composition: Vinyl Monomer with Hydroxy Group (wt%) | Average Degree of Polymerization | Property: Squareness Ratio | Property: Gloss (%) |
|---|---|---|---|---|---|---|---|---|---|
| 1 | A-1 | 75 | N-Cyclohexyl-maleimide | 10 | 2-Hydroxy-propyl acrylate | 15 | 460 | 0.08 | 82 |
| 2 | A-2 | 75 | N-Phenylmaleimide | 10 | do | 15 | 440 | 0.80 | 80 |
| 3 | A-3 | 75 | N-Cyclohexyl-maleimide | 10 | 2-Hydroxypropyl methacrylate | 15 | 480 | 0.81 | 80 |
| 4 | A-4 | 80 | do | 5 | 2-Hydroxypropyl acrylate | 15 | 490 | 0.80 | 79 |
| 5 | A-5 | 65 | do | 20 | do | 15 | 400 | 0.82 | 83 |
| 6 | A-6 | 83 | do | 7 | do | 10 | 360 | 0.82 | 35 |
| Comparative Example | | | | | | | | | |
| 1 | A-7 | 85 | - | - | do | 15 | 520 | 0.75 | 60 |
| 2 | A-8 | 90 | - | - | do | 10 | 400 | 0.78 | 78 |
| 3 | A-9 | Vinyl Chloride-Vinyl Acetate-Vinyl Alcohol Copolymer | | | | | 440 | 0.76 | 52 |

Examples 7 to 12 and Comparative Example 4

Each of the copolymers (A-1) to (A-6) and the copolymer (A-9) was dissolved in a mixed solution of toluene and methyl isobutyl ketone (1/1 by weight ratio) to provide a 15% by weight copolymer solution, and after supplying to the solution cobalt-modified γ-iron oxide in an amount of 4 times (by weight) the amount of the copolymer and stainless steel balls having a diameter of 0.31 cm (1/8 inch) in an amount of 32 times (by weight) the amount of the copolymer, the mixture was mixed by a paint conditioner for 4 hours. Then, an isocyanate compound (Colonate L, solid component 70% by weight, trade name, made by Nippon Polyurethane K.K.) was added to the mixture in an amount of 0.65 g per 15 g of the copolymer to provide each magnetic coating composition.

Then, in the same manner as in Example 1, a magnetic layer was formed using the coating composition obtained, the squareness ratio, the gloss and the heating adhesive property of each magnetic layer were measured. The results are shown in Table 2 below.

Apart from the above manner, an isocyanate compound (Colonate L, solid component 70% by weight, trade name, made by Nippon Polyurethane K.K.) was added to the copolymer solution in an amount of 0.65 g per 15 g of the copolymer followed by mixing to provide a coating composition, the coating composition obtained was coated on a glass plate and dried to 100°C for 2 hours and then to 50°C for 24 hours to form each sample for measuring the gel percentage. The results are also shown in Table 2 below.

Table 2

| Example | Copolymer | Squareness Ratio | Gloss (%) | Heating Adhesive Property | Gel Percentage (%) |
|---|---|---|---|---|---|
| 7 | A-1 | 0.80 | 81 | o | 87 |
| 8 | A-2 | 0.80 | 81 | o | 88 |
| 9 | A-3 | 0.81 | 81 | o | 86 |
| 10 | A-4 | 0.80 | 80 | o | 88 |
| 11 | A-5 | 0.81 | 82 | o | 85 |
| 12 | A-6 | 0.83 | 85 | o | 82 |
| Comparative Example 4 | A-9 | 0.75 | 53 | x | 62 |

Example 13

Copolymer (B-1) was obtained in the same manner as in Example 1 except that the mixed solution added was changed to a mixed solution of 10 g of 2-hydroxypropyl acrylate, 1.0 g of maleic acid n-butyl monoester, 7.0 g of N-cyclohexylmaleimide, and 10 g of acetone. The composition and the average degree of polymerization of the copolymer obtained were measured. The results are shown in Table 3 below.

Also, in the same manner as in Example 1, a magnetic coating composition was prepared, a magnetic layer was formed using the magnetic coating composition, and the squareness ratio and the gloss of the magnetic layer were measured. The results are shown in Table 3.

Examples 14 to 17

Copolymers (B-2) to (B-5) were prepared in the same manner as in Example 13 except that the kinds and the amounts of the N-substituted maleimides, the vinyl monomers with hydroxy groups and the polymerizable monomer with carboxyl group were changed. The composition and the average degree of polymerization of

each copolymer were measured. The results are shown in Table 3.

Also, in the same manner as in Example 13, each magnetic coating composition was prepared, a magnetic layer was formed using the magnetic coating composition, and the squareness ratio and the gloss of each magnetic layer were measured. The results are shown in Table 3 below.

Example 18

Copolymer (B-6) was obtained in the same manner as in Example 6 except that the mixed solution added was changed to a mixed solution of 6.75 g of 2-hydroxypropyl acrylate, 0.3 g of maleic acid, 4 g of N-cyclohexylmaleimide, 25 g of methanol, and 32.5 g of vinyl chloride. The composition and the average degree of polymerization of the copolymer obtained were measured. The results are shown in Table 3.

Also, in the same manner as in Example 1, a magnetic coating composition was prepared, a magnetic layer was formed using the magnetic coating composition, and the squareness ratio and the gloss of the magnetic layer were measured. The results are shown in Table 3 below.

Table 3

| Example | | Copolymer Composition | | | | | | | Average Degree of Polymerization | Properties | |
|---|---|---|---|---|---|---|---|---|---|---|---|
| | | Vinyl Chloride (wt%) | N-Substituted Maleimide | | Vinyl Monomer with Hydroxy Group | | Polymerizable Monomer with Carboxyl Group | | | Squareness Ratio | Gloss (%) |
| | | | Kind | (wt%) | Kind | (wt%) | Kind | (wt%) | | | |
| 13 | B-1 | 73.5 | N-Cyclohexyl-maleimide | 10.0 | 2-Hydroxy-propyl acrylate | 15.0 | Maleic acid n-butyl monoester | 1.5 | 440 | 0.83 | 86 |
| 14 | B-2 | 74.0 | do | 10.0 | do | 15.0 | Methacrylic acid | 1.0 | 430 | 0.84 | 84 |
| 15 | B-3 | 73.5 | do | 10.0 | 2-Hydroxy-propyl methacrylate | 15.0 | Maleic acid n-butyl monoester | 1.5 | 460 | 0.83 | 86 |
| 16 | B-4 | 73.0 | N-Phenyl-maleimide | 10.0 | 2-Hydroxy-propyl acrylate | 15.0 | do | 2.0 | 470 | 0.83 | 87 |
| 17 | B-5 | 63.5 | N-Cyclohexyl-maleimide | 20.0 | do | 15.0 | do | 1.5 | 400 | 0.84 | 85 |
| 18 | B-6 | 82.5 | do | 7.0 | do | 10.0 | Maleic acid | 0.5 | 350 | 0.85 | 90 |

Examples 19 to 24

In the same manner as in Example 7 using each of the copolymers (B-1) to (B-6), each of magnetic layers was formed, the squareness ratio, gloss, and heating adhesive property of the magnetic layer were measured and also the gel percentage thereof was measured in the same manner as above. The results are shown in Table 4 below.

Table 4

| Example | Copolymer | Squareness Ratio | Gloss (%) | Heating Adhesive Property | Gel Percentage (%) |
|---|---|---|---|---|---|
| 19 | B-1 | 0.83 | 85 | o | 85 |
| 20 | B-2 | 0.83 | 83 | o | 86 |
| 21 | B-3 | 0.83 | 84 | o | 87 |
| 22 | B-4 | 0.83 | 86 | o | 87 |
| 23 | B-5 | 0.84 | 85 | o | 83 |
| 24 | B-6 | 0.84 | 88 | o | 82 |

Example 25

Copolymer (C-1) was obtained in the same manner as in Example 1 except that the mixed solution used was changed to a mixed solution of 10 g of 2-hydroxypropyl acrylate, 1.0 g of 2-acrylamido-2-methylpropanesulfonic acid, 7.0 g of N-cyclohexylmaleimide, and 10 g of acetone. The composition and the average degree of polymerization of the copolymer obtained were measured. The results are shown in Table 5 below.

Also, in the same manner as in Example 1, a magnetic coating composition was prepared, a magnetic layer was formed using the magnetic coating composition, and the squareness ratio and the gloss of the magnetic layer were measured. The results are shown in Table 5.

Examples 26 to 29

Copolymers (C-2) to (C-5) were obtained in the same manner as in Example 25 except that the kinds and the amounts of the N-substituted maleimides, the vinyl monomers with hydroxy groups and the polymerizable monomer with phosphonic acid group were changed. The compositions and the average degrees of polymerization of the copolymers were measured. The results are shown in Table 5 below.

Also, in the same manner as in Example 1, a magnetic coating composition was prepared, each coating layer was formed using the magnetic coating composition, and the squareness ratio and the gloss of each magnetic layer were measured. The results are shown in Table 5 below.

Example 30

Copolymer (C-6) was obtained in the same manner as in Example 6 except that the mixed solution added was changed to a mixed solution of 6.75 g of 2-hydroxypropyl acrylate, 0.3 g of 2-acrylamido-2-methylpropanesulfonic acid, 4 g of N-cyclohexylmaleimide, 25 g of methanol, and 32.5 g of vinyl chloride. The composition and the average degree of polymerization of the copolymer obtained were measured. The results are shown in Table 5 below.

Also, in the same manner as in Example 1, a magnetic coating composition was prepared, a magnetic layer was formed using the magnetic coating composition, and the squareness ratio and the gloss of the magnetic layer were measured. The results are shown in Table 5 below.

Table 5

| Example | | Copolymer Composition: Vinyl Chloride (wt%) | N-Substituted Maleimide: Kind | N-Substituted Maleimide: (wt%) | Vinyl Monomer with Hydroxy Group: Kind | Vinyl Monomer with Hydroxy Group: (wt%) | Polymerizable Monomer with Sulfonic Acid Group: Kind | Polymerizable Monomer with Sulfonic Acid Group: (wt%) | Average Degree of Polymerization | Properties: Squareness Ratio | Properties: Gloss (%) |
|---|---|---|---|---|---|---|---|---|---|---|---|
| 25 | C-1 | 73.5 | N-Cyclohexyl-maleimide | 10.0 | 2-Hydroxy-propyl acrylate | 15.0 | 2-Acryl-amido-2-methyl-propane sulfonic acid | 1.5 | 440 | 0.83 | 85 |
| 26 | C-2 | 74.0 | do | 10.0 | do | 15.0 | Sodium methallyl-sulfonate | 1.0 | 450 | 0.83 | 86 |
| 27 | C-3 | 73.5 | do | 10.0 | 2-Hydroxy-propyl methacrylate | 15.0 | 2-Acrylamido-2-methyl propane sulfonic acid | 1.5 | 440 | 0.84 | 87 |
| 28 | C-4 | 73.0 | N-Phenyl-maleimide | 10.0 | 2-Hydroxy-propyl acrylate | 15.0 | do | 2.0 | 430 | 0.83 | 85 |
| 29 | C-5 | 63.5 | N-Cyclohexyl-maleimide | 20.0 | do | 15.0 | do | 1.5 | 400 | 0.84 | 98 |
| 30 | C-6 | 82.0 | do | 7.0 | do | 10.0 | do | 1.0 | 360 | 0.85 | 89 |

Examples 31 to 36

In the same manner as in Example 7 using each of the copolymers (C-1) to (C-6), each magnetic layer was formed, the squareness ratio, the gloss, and the heating adhesive property of the magnetic layer were measured and also the gel percentage was measured. The results are shown in Table 6 below.

Table 6

| Example | Copolymer | Squareness Ratio | Gloss (%) | Heating Adhesive Property | Gel Percentage (%) |
|---|---|---|---|---|---|
| 31 | C-1 | 0.83 | 84 | o | 82 |
| 32 | C-2 | 0.83 | 86 | o | 83 |
| 33 | C-3 | 0.83 | 86 | o | 82 |
| 34 | C-4 | 0.84 | 85 | o | 84 |
| 35 | C-5 | 0.84 | 87 | o | 84 |
| 36 | C-6 | 0.85 | 89 | o | 81 |

Example 37

Copolymer (D-1) was obtained in the same manner as in Example 1 except that the mixed solution added was changed to a mixed solution of 10 g of 2-hydroxypropyl acrylate, 1.0 g of acid phosphoxypropyl methacrylate, 7.0 g of N-cyclohexylmaleimide, and 10 g of acetone. The composition and the average degree of polymerization of the copolymer were measured. The results are shown in Table 7 below.

Also, in the same manner as in Example 1, a magnetic coating composition was prepared, a magnetic layer was formed using the magnetic coating composition, and the squareness ratio and the gloss of the magnetic layer were measured. The results are shown in Table 7 below.

Examples 38 to 41

Copolymers (D-2) to (D-5) were obtained in the same manner as in Example 37 except that the kinds and the amounts of the N-substituted maleimides, the vinyl monomers with hydroxy groups, and the polymerizable monomer with the phosphoric acid group were changed. The compositions and the average degrees of polymerization of the copolymers were measured. The results are shown in Table 7 below.

Also, in the same manner as in Example 37, each magnetic coating composition was prepared, a magnetic layer was formed using the magnetic coating composition, and the squareness ratio and the gloss of each magnetic layer were measured. The results are shown in Table 7 below.

Example 42

Copolymer (D-6) was obtained in the same manner as in Example 6 except that the mixed solution added was changed to a mixed solution of 6.75 g of 2-hydroxypropyl acrylate, 0.3 g of acid phosphoxypropyl methacrylate, 4 g of N-cyclohexylmaleimide, and 25 g of methanol, and 32.5 g of vinyl chloride. The composition and the average degree of polymerization of the copolymer obtained were measured. The results are shown in Table 7 below.

Also, in the same manner as in Example 1, a magnetic coating composition was prepared, a magnetic layer was formed using the magnetic coating composition, and the squareness ratio and the gloss of the magnetic layer were measured. The results are shown in Table 7 below.

Table 7

| Example | | Copolymer Composition | | | | | | | Average Degree of Polymerization | Properties | |
|---|---|---|---|---|---|---|---|---|---|---|---|
| | | Vinyl Chloride (wt%) | N-Substituted Maleimide | | Vinyl Monomer with Hydroxy Group | | Polymerizable Monomer with Phosphoric Acid Group | | | Squareness Ratio | Gloss (%) |
| | | | Kind | (wt%) | Kind | (wt%) | Kind | (wt%) | | | |
| 37 | D-1 | 73.5 | N-Cyclohexylmaleimide | 10.0 | 2-Hydroxypropyl acrylate | 15.0 | Acid phosphoxypropyl methacrylate | 1.5 | 440 | 0.83 | 86 |
| 38 | D-2 | 74.0 | do | 10.0 | do | 15.0 | Acid phosphoxyethy methacrylate | 1.0 | 430 | 0.83 | 86 |
| 39 | D-3 | 73.5 | do | 10.0 | 2-Hydroxypropyl methacrylate | 15.0 | Acid phosphoxypropyl methacrylate | 1.5 | 450 | 0.83 | 87 |
| 40 | D-4 | 73.0 | N-Phenylmaleimide | 10.0 | 2-Hydroxypropyl acrylate | 15.0 | do | 2.0 | 440 | 0.84 | 88 |
| 41 | D-5 | 63.5 | N-Cyclohexylmaleimide | 20.0 | do | 15.0 | do | 1.5 | 400 | 0.84 | 86 |
| 42 | D-6 | 82.0 | do | 7.0 | do | 10.0 | do | 1.0 | 340 | 0.85 | 90 |

Examples 43 to 48

In the same manner as in Example 7 using each of the copolymers (D-1) to (D-6), each magnetic layer was formed, the squareness ratio, the gloss, and the heating adhesive property of the magnetic layer were measured and also the gel percentage were measured. The results are shown in Table 8 below.

Table 8

| Example | Copolymer | Squareness Ratio | Gloss (%) | Heating Adhesive Property | Gel Percentage (%) |
|---|---|---|---|---|---|
| 43 | D-1 | 0.83 | 84 | o | 84 |
| 44 | D-2 | 0.84 | 84 | o | 86 |
| 45 | D-3 | 0.83 | 86 | o | 85 |
| 46 | D-4 | 0.84 | 87 | o | 87 |
| 47 | D-5 | 0.84 | 86 | o | 86 |
| 48 | D-6 | 0.84 | 90 | o | 83 |

Example 49

Copolymer (E-1) was obtained in the same manner as in Example 1 except that the mixed solution added was changed to a mixed solution of 10 g of 2-hydroxypropyl acrylate, 1.0 g of methacryloyloxyethyl trimethylammonium chloride, 7.0 g of N-cyclohexylmaleimide, and 10 g of acetone.

The composition and the average degree of polymerization of the copolymer obtained were measured. The results are shown in Table 9 below.

Also, in the same manner as in Example 1, a magnetic coating composition was prepared, a magnetic layer was formed using the magnetic coating composition, and the squareness ratio and the gloss of the magnetic layer were measured. The results are shown in Table 9 below.

Examples 50 to 53

Copolymers (E-2) to (E-5) were obtained in the same manner as in Example 49 except that the kinds and the amounts of the N-substituted maleimides, the vinyl monomers with hydroxy groups and the polymerizable monomer with quaternary ammonium salt group were changed. The compositions and the average degrees of polymerization of the compositions were measured. The results are shown in Table 9 below.

Also, in the same manner as in Example 1, each magnetic coating composition was prepared, a magnetic layer was formed using the magnetic coating composition, and the squareness ratio and the gloss of each magnetic layer were measured. The results are shown in Table 9 below.

Examples 54

Copolymer (E-6) was obtained in the same manner as in Example 6 except that the mixed solution added was changed to a mixed solution of 6.75 g of 2-hydroxypropyl acrylate, 0.3 g of methacryloyloxyethyltrimethyl ammonium chloride, 4 g of N-cyclohexylmaleimide, and 25 g of methanol, and 32.5 g of vinyl chloride.

The composition and the average degree of polymerization of the copolymer obtained were measured. The results are shown in Table 9 below.

Also, in the same manner as in Example 1, a magnetic coating composition was prepared, a magnetic layer was formed using the magnetic coating composition, and the squareness ratio and the gloss of the magnetic layer were measured. The results are shown in Table 9 below.

Table 9

| Example | | Copolymer Composition | | | | | | | | Properties | | |
|---|---|---|---|---|---|---|---|---|---|---|---|---|
| | | Vinyl Chloride | N-Substituted Maleimide | | Vinyl Monomer with Hydroxy Group | | Polymerizable Monomer with Quaternary Ammonium Salt Group | | Average Degree of Polymerization | Squareness Ratio | Gloss |
| | | (wt%) | Kind | (wt%) | Kind | (wt%) | Kind | (wt%) | | | (%) |
| 49 | E-1 | 73.5 | N-Cyclohexylmaleimide | 10.0 | 2-Hydroxypropyl acrylate | 15.0 | Methacryloyloxyethyltrimethyl ammonium chloride | 1.5 | 440 | 0.84 | 86 |
| 50 | E-2 | 74.0 | do | 10.0 | do | 15.0 | Trimethyl-3-methacrylamidopropyl ammonium chloride | 1.0 | 430 | 0.83 | 86 |
| 51 | E-3 | 73.5 | do | 10.0 | 2-Hydroxypropyl methacrylate | 15.0 | Methacryloyloxyethyltrimethyl ammonium chloride | 1.5 | 440 | 0.84 | 85 |
| 52 | E-4 | 73.0 | N-Phenylmaleimide | 10.0 | 2-Hydroxypropyl acrylate | 15.0 | do | 2.0 | 450 | 0.84 | 87 |
| 53 | E-5 | 63.5 | N-Cyclohexylmaleimide | 20.0 | do | 15.0 | do | 1.5 | 400 | 0.84 | 85 |
| 54 | E-6 | 82.0 | do | 7.0 | do | 10.0 | do | 1.0 | 350 | 0.86 | 90 |

Examples 55 to 60

In the same manner as in Example 7 using each of the copolymers (E-1) to (E-6), each magnetic layer was formed, the squareness ratio, the gloss, and the heating adhesive property of the magnetic layer were measured and also the gel percentage were measured. The results are shown in Table 10 below.

Table 10

| Example | Copolymer | Squareness Ratio | Gloss (%) | Heating Adhesive Property | Gel Percentage (%) |
|---|---|---|---|---|---|
| 55 | E-1 | 0.83 | 86 | o | 84 |
| 56 | E-2 | 0.83 | 85 | o | 82 |
| 57 | E-3 | 0.84 | 85 | o | 83 |
| 58 | E-4 | 0.84 | 86 | o | 80 |
| 59 | E-5 | 0.83 | 86 | o | 81 |
| 60 | E-6 | 0.85 | 90 | o | 80 |

Example 61

In 15 liter pressure vessel equipped with a stirrer and a jacket were charged 8 kg of ion-exchanged water, 11 g of hydroxypropylethyl cellulose, and 8.8 g of dilauroyl peroxide, after tightly closing the vessel and removing remaining air in the vessel, 3 kg of vinyl chloride was pressed in, and the mixture was heated to 70°C by the jacket. Immediately after reaching the temperature in the vessel 70°C, a solution of 10 g of 2-hydroxypropyl acrylate, 7 g of N-cyclohexylmaleimide, and 1 g of diethylamino acrylate dissolved in 10 g of acetone was pressed in the vessel, and the same amount of the solution was added 39 times at an interval of 5 minutes. Polymerization was carried out with strirring. After 5 minutes since the final addition of the solution, the reaction mixture was cooled, remaining unreacted vinyl chloride was discharged from the vessel, and the polymer slurry was taken out, washed by ion-exchanged water, and dried to provide a vinyl chloride type copolymer (F-1).

The composition and the average degree of polymerization of the copolymer (F-1) obtained were measured. The results are shown in Table 11.

Then, the copolymer obtained was dissolved in a mixed solvent of toluene and methyl isobutyl ketone (1/1 by weight) to provide a 15% by weight copolymer solution, and after supplying the solution thus prepared and cobalt-modified γ-iron oxide in an amount of 4 times the amount of the copolymer into a paint conditioner containing stainless steel balls having a diameter of 0.31 cm (1/8 inch), the mixture was dispersed for 4 hours to provide a magnetic coating composition.

The magnetic coating composition obtained was coated on a polyethylene terephthalate film of 25 μm in thickness, and after orienting the ferromagnetic powder by applying a magnetic field of 2,000 Gs, the layer was dried to provide a magnetic recording medium having a magnetic layer having a thickness of 6 μm.

The squareness ratio of the magnetic recording medium obtained and the gloss of the surface of the magnetic layer were measured. The results are shown in Table 11 below.

Examples 62 to 66 and Comparative Example 5

Copolymers (F-2) to (F-7) were prepared in the same manner as in Example 61 except that the kinds and the amounts of the components in the copolymer were changed as shown in Table 11 below. In the same

manner as in Example 61 using each copolymer thus obtained, each magnetic recording medium was obtained.

The compositions and average degrees of polymerization of the copolymers obtained and the properties of the magnetic recording media were measured as in Example 61. The results are shown in Table 11 below.

Table 11

| Example | Copolymer | Vinyl Chloride (wt %) | Copolymer Composition: Vinyl Monomer with Hydroxy Group – Kind | (wt %) | N-substituted Maleimide – Kind | (wt %) | Polymerizable Monomer with Amino Group – Kind | (wt %) |
|---|---|---|---|---|---|---|---|---|
| 61 | F-1 | 74 | 2-Hydroxypropyl acrylate | 15 | N-cyclohexyl-maleimide | 10 | Diethylamino acrylate | 1.0 |
| 62 | F-2 | 72 | do | 15 | do | 10 | Dimethylamino acrylate | 3.0 |
| 63 | F-3 | 69 | do | 15 | N-phenylmaleimide | 15 | Diethylamino acrylate | 1.0 |
| 64 | F-4 | 74 | 2-Hydroxyethyl acrylate | 15 | do | 10 | do | 1.0 |
| 65 | F-5 | 69 | do | 20 | N-cyclohexyl-maleimide | 10 | N,N-dimethylamino-propyl acrylamide | 1.0 |
| 66* | F-6 | 74 | 2-Hydroxypropyl acrylate | 15 | do | 10 | Diethylamino acrylate | 0.5 |
| Comparative Example | | | | | | | | |
| 5 | F-7 | 84 | do | 15 | - | - | do | 1.0 |

* Copolymer composition of Example 66 contains 0.5 wt% of maleic acid n-butyl monoester as a polymerizable monomer containing a functional group other than amino group.

Table 11 (Cont'd)

| Example | Average Degree of Polymerization | Property: Squareness Ratio | Property: Gloss (%) |
|---|---|---|---|
| 61 | 460 | 0.85 | 85 |
| 62 | 470 | 0.87 | 90 |
| 63 | 400 | 0.86 | 87 |
| 64 | 450 | 0.85 | 84 |
| 65 | 420 | 0.86 | 85 |
| 66 | 460 | 0.86 | 85 |
| Comparative Example | | | |
| 5 | 520 | 0.76 | 75 |

Examples 67 to 72

In the same manner as in Example 61 except that a magnetic coating composition obtained by adding an isocyanate compound (Colonate L, solid component 70% by weight, trade name, made by Nippon Polyurethane K.K.) to the magnetic coating composition obtained in Examples 61 to 66 followed by mixing was used, a magnetic recording medium was obtained. The squareness ratio, the gloss, and the heating adhesive property of the magnetic recording medium thus obtained were measured and also the gel percentage of the coating composition was measured. The results are shown in Table 12 below.

Table 12

| Example | Copolymer | Squareness Ratio | Gloss (%) | Heating Adhesive Property | Gel Percentage |
|---|---|---|---|---|---|
| 67 | F-1 | 0.85 | 84 | o | 86 |
| 68 | F-2 | 0.86 | 90 | o | 82 |
| 69 | F-3 | 0.86 | 87 | o | 86 |
| 70 | F-4 | 0.85 | 84 | o | 87 |
| 71 | F-5 | 0.86 | 85 | o | 92 |
| 72 | F-6 | 0.85 | 85 | o | 85 |

Example 73

In 15 liter pressure vessel equipped with a stirrer and a jacket were charged 8 kg of ion-exchanged water, 11 g of hydroxypropylethyl cellulose, and 8.8 g of dilauroyl peroxide, after tightly closing the vessel and removing remaining air in the vessel, 3 kg of vinyl chloride was pressed in, and the mixture was heated to 70°C. Immediately after reaching the temperature in the vessel 70°C, a solution of 10 g of glycidyl acrylate, 7 g of N-cyclohexylmaleimide dissolved in 10 g of acetone was pressed in the vessel, and the same amount of the solution was added 39 times at an interval of 5 minutes. Polymerization was carried out with stirring. After 5 minutes since the final addition of the solution, the reaction mixture was cooled and remaining unreacted vinyl chloride was discharged from the vessel. Then, the polymer slurry was taken out, washed by ion-exchanged water, and dried to provide Copolymer (G-1).

The composition and average degree of the polymerization of the copolymer (G-1) obtained were measured. The results are shown in Table 13.

The copolymer (G-1) obtained was dissolved in a mixed solvent of toluene and methyl isobutyl ketone (1/1 by weight ratio) to provide a 15% by weight of the copolymer solution, and after supplying the copolymer solution and cobalt-modified γ-iron oxide in an amount of 4 times the amount of the copolymer into a paint conditioner containing stainless steel balls having a diameter of 0.31 cm (1/8 inch), the mixture was dispersed for 4 hours to provide a magnetic coating composition.

The magnetic coating composition obtained was coated on a polyethylene terephthalate film of 25 μm in thickness and after orienting the ferromagnetic powder by applying a magnetic field of 2,000 Gs, the layer was dried to provide a magnetic recording medium having formed thereon a magnetic layer having a thickness of 6 μm.

The squareness ratio of the magnetic recording medium obtained and the gloss of the surface of the magnetic layer were measured. The results are shown in Table 13.

Examples 74 to 77

Copolymers (G-2) to (G-5) were obtained in the same manner as in Example 73 except that the kinds and the amounts of the components in the copolymer were changed as shown in Table 13 below, and in the same manner as in Example 73 using each copolymer, each of magnetic recording media was obtained.

The compositions and average degrees of polymerization of the copolymers (G-2) to (G-5) obtained and the properties of the magnetic recording media were measured as in Example 73. The results are shown in Table 13.

Comparative Examples 6 and 7

Copolymers (G-7) and (G-8) were obtained in the same manner as in Example 73 except that the kinds and the amounts of the composition in the copolymer were changed as shown in Table 13, and in the same manner as in Example 73 using each copolymer, each of magnetic recording media was obtained.

The compositions and average degrees of polymerization of the copolymers obtained and the properties of the magnetic recording media were measured as in Example 73. The results are shown in Table 13.

Example 78

In 25 liter pressure vessel equipped with a stirrer and a jacket were charged 6.8 kg of methanol and 53 g of α-cumylperoxy neodecanoate, after tightly closing the vessel and removing remaining air therefrom, 3.5 kg of vinyl chloride was pressed in, and the mixture was heated to 43°C by the jacket. Immediately after reaching the temperature in the vessel 43°C, a mixed solution of 6.75 g of glycidyl acrylate, 4 g of N-cyclohexylmaleimide, and 32.5 g of vinyl chloride was pressed in the vessel, and the same amount of the solution was added 39 times at an interval of 5 minutes. Polymerization was carried out with stirring. After 5 minutes since the final addition of the solution, the reaction mixture was cooled and remaining unreacted vinyl chloride was discharged from the vessel. Then, the polymer slurry was taken out, washed by ion-exchanged water, and dried to provide a copolymer (G-6). Also, in the same manner as Example 73 using the copolymer, a magnetic recording medium was obtained.

The compositions and average degree of polymerization of the copolymer (G-6) obtained and the properties of the magnetic recording medium were measured as in Example 73. The results are shown in Table 13.

Table 13

| Example | Copolymer | Copolymer Composition | | | | | Average Degree of Polymerization | Properties | |
|---|---|---|---|---|---|---|---|---|---|
| | | Vinyl Chloride (wt%) | Vinyl Monomer with Epoxy Group Kind | Vinyl Monomer with Epoxy Group (wt%) | N-Substituted Maleimide Kind | N-Substituted Maleimide (wt%) | | Squareness Ratio | Gloss (%) |
| 73 | G-1 | 75 | Glycidyl Acrylate | 15 | N-Cyclohexylmaleimide | 10 | 480 | 0.80 | 80 |
| 74 | G-2 | 75 | do | 15 | N-Phenylmaleimide | 10 | 470 | 0.79 | 79 |
| 75 | G-3 | 75 | Glycidyl ethylmaleate | 15 | N-Cyclohexylmaleimide | 10 | 490 | 0.81 | 80 |
| 76 | G-4 | 80 | Glycidyl acrylate | 15 | do | 5 | 500 | 0.79 | 80 |
| 77 | G-5 | 65 | do | 15 | do | 20 | 420 | 0.82 | 82 |
| 78 | G-6 | 83 | do | 10 | do | 7 | 380 | 0.82 | 83 |
| Comparative Example 6 | G-7 | 85 | do | 15 | - | - | 550 | 0.72 | 60 |
| 7 | G-8 | 90 | do | 10 | - | - | 430 | 0.75 | 72 |

Example 79 to 84

A magnetic recording medium was obtained in the same manner as in Example 73 except that a magnetic coating composition obtained by adding an isocyanate compound (Colonate, solid component 70% by weight, trade name, made by Nippon Polyurethane K.K.) in an amount of 3 parts by weight as solid component per 100 parts by weight of the copolymer and maleic acid as an acidic compound in an amount of 13.6 parts by weight (the same equivalent as the chemical equivalent of the epoxy group in the copolymer) per 100 parts by weight of the copolymer to each of the magnetic coating compositions obtained in Examples 73 to 78 followed by mixing was used.

The squareness ratio, the gloss, and the heating adhesive property and the gel percentage of the coating composition were measured. The results are shown in Table 14 below.

Table 14

| Example | Copolymer | Squareness Ratio | Gloss (%) | Heating Adhesive Property | Gel Percentage |
|---|---|---|---|---|---|
| 79 | G-1 | 0.80 | 80 | o | 82 |
| 80 | G-2 | 0.79 | 79 | o | 83 |
| 81 | G-3 | 0.80 | 79 | o | 85 |
| 82 | G-4 | 0.79 | 79 | o | 83 |
| 83 | G-5 | 0.82 | 82 | o | 83 |
| 84 | G-6 | 0.81 | 81 | o | 84 |

Example 85

Copolymer (H-1) was obtained in the same manner as in Example 73 except that the mixed solution added was changed to a solution of 10 g of a glycidyl acrylate, 7 g of N-cyclohexylmaleimide, and 1 g of maleic acid n-butyl monoester dissolved in 10 g of acetone, and in the same manner as in Example 73 using the copolymer, magnetic recording medium was obtained.

The composition and average degree polymerization of the copolymer (H-1) obtained, and the properties of the magnetic recording medium were measured as in Example 73. The results are shown in Table 15.

Examples 86 to 91

Copolymers (H-2) to (H-7) were obtained in the same manner as in Example 85 except that the kinds and the amounts of the compositions in the copolymer were changed as shown in Table 15, and in the same manner as in Example 73, each of magnetic recording media was obtained.

The compositions and average degrees of polymerization of the copolymers (H-2) to (H-7) obtained and the properties of the magnetic recording media were measured as in Example 73. The results are shown in Table 15.

Table 15

| Example | Copolymer | Copolymer Composition: Chloride Vinyl (wt%) | Vinyl Monomer with Epoxy Group: Kind | Vinyl Monomer with Epoxy Group: (wt%) | N-Substituted Maleimide: Kind | N-Substituted Maleimide: (wt%) | Polymerizable Monomer with Functional Group: Kind | Polymerizable Monomer with Functional Group: (wt%) | Properties: Average Degree of Polymerization | Properties: Squareness Ratio | Properties: Gloss (%) |
|---|---|---|---|---|---|---|---|---|---|---|---|
| 85 | H-1 | 74 | Glycydyl acrylate | 15 | N-Cyclohexyl maleimide | 10 | Maleic acid n-butyl monoester | 1 | 480 | 0.82 | 85 |
| 86 | H-2 | 64 | do | 15 | do | 20 | 2-Acrylamido-2-methyl-sulfonic acid | 1 | 400 | 0.84 | 86 |
| 87 | H-3 | 74 | Glycidyl ethylmaleate | 15 | do | 10 | Sodium-methallyl-sulfonate | 1 | 490 | 0.82 | 84 |
| 88 | H-4 | 74 | Glycidyl acrylate | 15 | N-Phenyl-maleimide | 10 | Acid phosphoxy-propyl acrylate | 1 | 490 | 0.82 | 85 |

Table 15 (Cont'd)

| Example | Copolymer | Copolymer Composition: Chloride Vinyl (wt%) | Vinyl Monomer with Epoxy Group: Kind | Vinyl Monomer with Epoxy Group: (wt%) | N-Substituted Maleimide: Kind | N-Substituted Maleimide: (wt%) | Polymerizable Monomer with Functional Group: Kind | Polymerizable Monomer with Functional Group: (wt%) | Average Degree of Polymerization | Properties: Squareness Ratio | Properties: Gloss (%) |
|---|---|---|---|---|---|---|---|---|---|---|---|
| 89 | H-5 | 74 | do | 15 | N-Cyclohexyl maleimide | 10 | Meth-acryloyloxy-ethylltimethl ammonium chloride | 2 | 500 | 0.84 | 87 |
| 90 | H-6 | 71 | do | 15 | do | 10 | Diethyl-amino acrylate | 4 | 500 | 0.85 | 88 |
| 91 | H-7 | 73 | do | 15 | do | 10 | Maleic Acid n-Butyl monoester | 1 | | | |
| | | | | | | | Trimethyl-3-methacryl-amidopropyl ammonium chloride | 1 | 490 | 0.84 | 86 |

Examples 92 to 98

In the same manner as in Example 79 using each of the magnetic coating compositions obtained in Examples 85 to 91, each of magnetic recording media was obtained.

The squareness ratio, the gloss, and the heating adhesive property of each magnetic recording medium and the gel percentages of the coating compositions were measured. The results are shown in Table 16 below.

Table 16

| Example | Copolymer | Squareness Ratio | Gloss (%) | Heating Adhesive Property | Gel Percentage |
|---|---|---|---|---|---|
| 92 | H-1 | 0.82 | 84 | o | 84 |
| 93 | H-2 | 0.85 | 85 | o | 83 |
| 94 | H-3 | 0.83 | 84 | o | 84 |
| 95 | H-4 | 0.82 | 85 | o | 85 |
| 96 | H-5 | 0.84 | 87 | o | 84 |
| 97 | H-6 | 0.85 | 87 | o | 85 |
| 98 | H-7 | 0.84 | 85 | o | 88 |

As described above in detail, since the binder for magnetic recording medium according to the first embodiment of the present invention is a copolymer composed of the specific amount of vinyl chloride, the specific amount of the vinyl monomer with hydroxy group or vinyl monomer with epoxy group, and the specific amount of the N-substituted maleimide, in the case of dispersing a finely grained ferromagnetic powder in the binder, the dispersibility is excellent. Accordingly, the magnetic layer formed by using the binder for magnetic recording medium of the present invention has a high squareness ratio and a proper hardness and flexibility, and hence by using the binder of the present invention, a magnetic recording medium excellent in slide contact resistance with a magnetic head can be obtained.

Also, by adding an isocyanate compound or an isocyanate and an acidic compound to the composition, the hydroxy group and the isocyanate compound, or the epoxy group and the isocyanate compound cause a crosslinking reaction, whereby a magnetic recording medium more excellent in an abrasion resistance and a heat resistance can be obtained.

In the second embodiment of the present invention, a polymerizable monomer having at least one kind of a carboxyl group, a sulfonic acid group, a sulfonate group, a phosphoric acid group, a quaternary ammonium salt group and an amino group is further copolymerized, and hence a magnetic recording medium having a higher squareness ratio of the magnetic layer and having more excellent abrasion resistance, heat resistance, etc., can be obtained.

## Claims

1. A binder for a magnetic recording medium comprising
   (a) from 59 to 98% by weight of vinyl chloride,
   (b) from 1 to 30% by weight of vinyl monomers with hydroxy groups or vinyl monomers with epoxy groups, and
   (c) from 1 to 40% by weight of N-substituted maleimide.

2. The binder for a magnetic recording medium of claim 1, wherein the vinyl monomer with hydroxy group (b) is 2-hydroxyethyl (meth)acrylate, 2-hydroxypropyl (meth)acrylate, 3-chloro-2-hydroxypropyl (meth)acrylate, polyethylene glycol mono(meth)acrylate represented by the formula

$$CH_2=CR\text{-}COO(CH_2CH_2O)_nH$$

(wherein n represents an integer of from 2 to 9 and R represents a hydrogen atom or a methyl group), polypropylene glycol mono(meth)acrylate represented by the formula

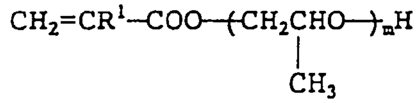

(wherein m represents an integer of from 2 to 6 and $R^1$ represents a hydrogen atom or a methyl group), 2-hydroxyethyl-2-acryloyloxy phthalate, or N-methylol (meth)acrylamide.

3. The binder for a magnetic recording medium of claim 1, wherein the vinyl monomer with hydroxy group (b) is 2-hydroxyethyl (meth)acrylate or 2-hydroxypropyl (meth)acrylate.

4. The binder for a magnetic recording medium of claim 1, wherein the vinyl monomer with epoxy group (b) is allyl glycidyl ether, methallyl glycidyl ether, glycidyl acrylate, glycidyl methacrylate, methylglycidyl itaconate, glycidylethyl maleate, butadiene monooxide, or vinylcyclohexene monooxide.

5. The binder for a magnetic recording medium of claim 1, the content of the component (b) is from 8 to 20% by weight.

6. The binder for a magnetic recording medium of claim 1, wherein the N-substituted maleimide (c) is a compound represented by the formula;

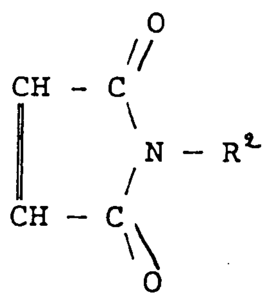

wherein $R^2$ represents an aliphatic group, an alicyclic group, or an aromatic group, having from 1 to 20 carbon atoms.

7. The binder for a magnetic recording medium of claim 1, wherein the N-substituted maleimide (c) is N-methylmaleimide, N-n-propylmaleimide, N-isopropylmaleimide, N-n-butylmaleimide, N-tert-butylmaleimide, N-n-hexylmaleimide, N-cyclohexylmaleimide, N-phenylmaleimide, N-2-chlorophenylmaleimide, N-2-methylphenylmaleimide, N-2-ethylphenylmaleimide, N-2,6-dichlorophenylmaleimide, N-2,6-dimethylphenylmaleimide, N-benzylmaleimide, N-(2-chlorobenzyl)maleimide, N-(2-methylbenzyl)maleimide, or N-naphthylmaleimide.

8. The binder for a magnetic recording medium of claim 1, wherein the N-substituted maleimide (c) is N-cyclohexylmaleimide or N-phenylmaleimide.

9. The binder for a magnetic recording medium of claim 1, wherein the content of the component (c) is from 5 to 30% by weight.

10. The binder for a magnetic recording medium of claim 1, wherein the average degree of polymerization of the binder is from 150 to 800.

11. A binder for a magnetic recording medium comprising
(a) from 59 to 97% by weight of vinyl chloride,
(b) from 1 to 30% by weight of vinyl monomers with hydroxy groups or vinyl monomers with epoxy

groups,
(c) from 1 to 40% by weight of N-substituted maleimide, and
(d) from 0.05 to 5% by weight of at least one kind of polymerizable monomer having a carboxyl group, a sulfonic acid group, a sulfonate group, a phosphoric acid group, a quaternary ammonium salt group or an amino group.

## Patentansprüche

1. Bindemittel für ein magnetisches Aufzeichnungsmedium umfassend
(a) 59 bis 98 Gew.-% Vinylchlorid,
(b) 1 bis 30 Gew.-% Vinylmonomere mit Hydroxygruppen oder Vinylmonomere mit Epoxygruppen und
(c) 1 bis 40 Gew.-% N-substituiertes Maleimid.

2. Bindemittel für ein magnetisches Aufzeichnungsmedium nach Anspruch 1, bei dem das Vinylmonomer mit Hydroxygruppe (b) 2-Hydroxyethyl(meth)acrylat, 2-Hydroxypropyl(meth)acrylat, 3-Chlor-2-hydroxypropyl(meth)acrylat, Polyethylenglykolmono(meth)acrylat, das durch die Formel

$$CH_2=CR-COO(CH_2CH_2O)_n H$$

(worin n eine ganze Zahl von 2 bis 9 darstellt und R ein Wasserstoffatom oder eine Methylgruppe darstellt) dargestellt wird,
Polypropylenglykolmono(meth)acrylat, das durch die Formel

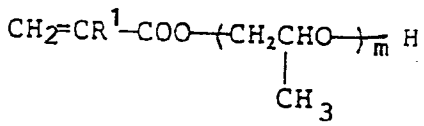

(worin m eine ganze Zahl von 2 bis 6 darstellt und $R^1$ ein Wasserstoffatom oder eine Methylgruppe darstellt), dargestellt wird,
2-Hydroxyethyl-2-acryloyloxyphthalat oder
N-Methylol(rneth)acrylamid ist.

3. Bindemittel für ein magnetisches Aufzeichnungsmedium nach Anspruch 1, bei dem das Vinylmonomer mit Hydroxygruppe (b) 2-Hydroxyethyl(meth)acrylat oder 2-Hydroxypropyl(meth)acrylat ist.

4. Bindemittel für ein magnetisches Aufzeichnungsmedium nach Anspruch 1, bei dem das Vinylmonomer mit Epoxygruppe (b) Allylglycidylether, Methallylglycidylether, Glycidylacrylat,Glycidylmethacrylat, Methylglycidylitakonat, Glycidylethylmaleat, Butadienmonooxid oder Vinylcyclohexenmonooxid ist.

5. Bindemittel für ein magnetisches Aufzeichnungsmedium nach Anspruch 1, bei dem der Gehalt der Komponente (b) 8 bis 20 Gew.-% beträgt.

6. Bindemittel für ein magnetisches Aufzeichnungsmedium nach Anspruch 1, bei dem das N-substituierte Maleimid (c) eine Verbindung ist, die durch die Formel

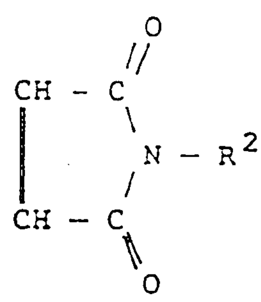

worin $R^2$ eine aliphatische Gruppe, eine alizyklische Gruppe oder eine aromatische Gruppe mit 1 bis 20

Kohlenstoffatomen darstellt, dargestellt wird.

7. Bindemittel für ein magnetisches Aufzeichnungsmedium nach Anspruch 1, bei dem das N-substituierte Maleimid (c) N-Methylmaleimid, N-n-Propyl-maleimid, N-Isopropylmaleimid, N-n-Butylmaleimid, N-tert.-Butylmaleimid, N-n-Hexylmaleimid, N-Cyclohexylmaleimid, N-Phenylmaleimid, N-2-Chlorphenylmaleimid, N-2-Methylphenylmaleimid, N-2-Ethylphenylmaleimid, N-2,6-Dichlorphenylmaleimid, N-2,6-Dimethylphenylmaleimid, N-Benzylmaleimid, N-(2-Chlorbenzyl)maleimid, N-(2-Methylbenzyl)maleimid oder N-Naphthylmaleimid ist.

8. Bindemittel für ein magnetisches Aufzeichnungsmedium nach Anspruch 1, bei dem das N-substituierte Maleimid (c) N-Cyclohexylmaleimid oder N-Phenylmaleimid ist.

9. Bindemittel für ein magnetisches Aufzeichnungsmedium nach Anspruch 1, bei dem der Gehalt der Komponente (c) 5 bis 30 Gew.-% beträgt.

10. Bindemittel für ein magnetisches Aufzeichnungsmedium nach Anspruch 1, bei dem der mittlere Polymerisationsgrad des Bindemittels 150 bis 800 ist.

11. Bindemittel für ein magnetisches Aufzeichnungsmedium umfassend
(a) 59 bis 97 Gew.-% Vinylchlorid,
(b) 1 bis 30 Gew.-% Vinylmonomere mit Hydroxygruppen oder Vinylmonomere mit Epoxygruppen,
(c) 1 bis 40 Gew.-% N-substituiertes Maleimid, und
(d) 0,05 bis 5 Gew.-% mindestens eine Art polymerisierbares Monomer, das eine Carboxylgruppe, eine Sulfonsäuregruppe, eine Sulfonatgruppe, eine Phosphorsäuregruppe, eine quaternäre Ammoniumsalzgruppe oder eine Aminogruppe aufweist.

## Revendications

1. Liant pour support d'enregistrement magnétique comprenant
(a) de 59 à 98 % en poids de chlorure de vinyle,
(b) de 1 à 30 % en poids de monomères vinyliques à groupe hydroxy ou de monomères vinyliques à groupe époxy et
(c) de 1 à 40 % en poids de maléimides N-substitués.

2. Liant pour support d'enregistrement magnétique selon la revendication 1, dans lequel le monomère vinylique à groupe hydroxy (b) est le (méth)-acrylate de 2-hydroxyéthyle, le (méth)acrylate de 2-hydroxypropyle, le (méth)-acrylate de 3-chloro-2-hydroxypropyle, un mono(méth)acrylate de polyéthylèneglycol de formule

$$CH_2{=}CR\text{-}COO\text{-}(CH_2CH_2O)_n\text{-}H$$

(dans laquelle n représente un entier de 2 à 9 et R représente un atome d'hydrogène ou un groupe méthyle), un mono(méth)acrylate de polypropylèneglycol de formule

$$CH_2{=}CR^1\text{-}COO\text{-}(CH_2\underset{\displaystyle CH_3}{\underset{|}{C}}HO)_m\text{-}H$$

(dans laquelle m représente un entier de 2 à 6 et $R^1$ représente un atome d'hydrogène ou un groupe méthyle), le 2-acryloyloxyphtalate de 2-hydroxyéthyle ou le N-méthylol-(méth)acrylamide.

3. Liant pour support d'enregistrement magnétique selon la revendication 1, dans lequel le monomère vinylique à groupe hydroxy (b) est le (méth)-acrylate de 2-hydroxyéthyle ou le (méth)acrylate de 2-hydroxypropyle.

4. Liant pour support d'enregistrement magnétique selon la revendication 1, dans lequel le monomère vinylique à groupe époxy (b) est l'allylglycidyléther, le méthallylglycidyléther, l'acrylate de glycidyle, le méthacrylate de glycidyle, l'itaconate de méthyle et de glycidyle, le maléate de glycidyle et d'éthyle, le monoxyde de butadiène ou le monoxyde de vinylcyclohexène.

5. Liant pour support d'enregistrement magnétique selon la revendication 1, dans lequel la teneur en composant (b) est de 8 à 20 % en poids.

6. Liant pour support d'enregistrement magnétique selon la revendication 1, dans lequel le maléimide N-substitué (c) est un composé représenté par la formule

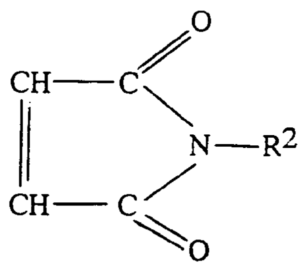

dans laquelle $R^2$ représente un groupe aliphatique, un groupe alicyclique ou un groupe aromatique en $C_1$-$C_{20}$.

7. Liant pour support d'enregistrement magnétique selon la revendication 1, dans lequel le maléimide N-substitué (c) est le N-méthylmaléimide, le N-n-propylmaléimide, le N-isopropylmaléimide, le N-n-butylmaléimide, le N-tert-butylmaléimide, le N-n-hexylmaléimide, le N-cyclohexylmaléimide, le N-phénylmaléimide, le N-2-chlorophénylmaléimide, le N-2-méthylphénylmaléimide, le N-2-éthylphénylmaléimide, le N-2,6-dichlorophénylmaléimide, le N-2,6-diméthylphénylmaléimide, le N-benzylmaléimide, le N-(2-chlorobenzyl)maléimide, le N-(2-méthylbenzyl)maléimide ou le N-naphtylmaléimide.

8. Liant pour support d'enregistrement magnétique selon la revendication 1, dans lequel le maléimide N-substitué (c) est le N-cyclohexylmaléimide ou le N-phénylmaléimide.

9. Liant pour support d'enregistrement magnétique selon la revendication 1, dans lequel la teneur en composant (c) est de 5 à 30 % en poids.

10. Liant pour support d'enregistrement magnétique selon la revendication 1, dans lequel le degré moyen de polymérisation du liant est de 150 à 800.

11. Liant pour support d'enregistrement magnétique comprenant
(a) de 59 à 97 % en poids de chlorure de vinyle,
(b) de 1 à 30 % en poids de monomères vinyliques à groupe hydroxy ou de monomères vinyliques à groupe époxy
(c) de 1 à 40 % en poids de maléimide N-substitué et
(d) de 0,05 à 5 % en poids d'au moins un type d'un monomère polymérisable ayant un groupe carboxyle, un groupe acide sulfonique, un groupe sulfonate, un groupe acide phosphorique, un groupe sel d'ammonium quaternaire ou un groupe amino.